# EUROPÄISCHE PATENTSCHRIFT

(11) **EP 0 799 387 B1**
(45) Veröffentlichungstag und Bekanntmachung des Hinweises auf die Patenterteilung: **04.07.2001**
(21) Anmeldenummer: 95941720.5
(22) Anmeldetag: 18.12.1995
(51) Int. Cl.: F16B 25/10

(54) **LOCH- UND GEWINDEFORMENDE SCHRAUBE SOWIE VERFAHREN ZUM EINDREHEN DERSELBEN**
HOLE-SHAPING AND THREAD-FORMING SCREW AND PROCESS FOR DRIVING IN THE SAME
VIS FOREUSE ET TARAUDEUSE ET SON PROCEDE DE VISSAGE

(30) Priorität: 21.12.1994 DE 4445815
(43) Veröffentlichungstag der Anmeldung: 08.10.1997
(73) Patentinhaber: SFS Industrie Holding AG, 9435 Heerbrugg (CH)
(72) Erfinder: ÖSTERLE, Helmut, A-6800 Feldkirch (AT); PALM, Erich, CH-9434 Au (CH)
(74) Vertreter: Ludescher, Hans
(86) Internationale Anmeldenummer: EP9504995
(87) Internationale Veröffentlichungsnummer: WO9619676

(56) Entgegenhaltungen:
- EP-A- 0 517 671
- WO-A-94/25764
- DE-C- 54 903
- FR-A- 1 008 781
- US-A- 3 156 152

## Beschreibung

Die Erfindung betrifft eine loch- und gewindeformende Schraube mit einem zu einer Spitze oder zu einer spitzenähnlichen Form auslaufenden, schneidkanten freien, spanlos lochformenden Endabschnitt, einen mit einem Gewinde versehenen Schaftabschnitt und einem Angriffsabschnitt zum An- oder Einsetzen eines Werkzeuges, sowie ein Verfahren zum Eindrehen einer loch- und gewindeformenden Schraube.

Es ist bereits eine loch- und gewindeformende Schraube bekannt geworden, welche mehrere, winkelmässig gegeneinander abgesetzte kegelige oder kegelstumpfförmige Abschnitte aufweist (US 3,156,152 A), wobei diese Schraube aus einem Kohlenstoffstahl hergestellt wird, welcher in entsprechender Weise gehärtet werden kann.

Zudem ist eine Schraube bekannt (EP 0 517 671 A), die mit Ausnahme einer kleinen Spitze bis an ihr freies Ende mit einem Gewinde versehen ist. Mit dieser Schraube soll ein Bauteil lösbar befestigt werden können, wobei der Unterbau aus einem Material geringer Eigenfestigkeit besteht. Eine geringe Eigenfestigkeit liegt dann vor, wenn die Spitze der Schraube praktisch von Hand eingedrückt werden kann und das Gewinde gleich nachfolgend eine Aufweitung des durch die Spitze hergestellten Loches bewirkt. Diesfalls geht es ganz klar um eine aus Kunststoff gefertigte Schraube, wobei dann, wenn das Material, in welches die Schraube eingedreht werden soll, nur geringfügig stabiler wird, eine gehärtete Spitze eingesetzt werden muss.

Bei gewindeformenden Schrauben, die sich ihr Loch selbst bohren oder spanlos formen, war es bisher eine Selbstverständlichkeit, den lochformenden Endabschnitt aus einem härtbaren Material, also Kohlenstoffstahl, zu fertigen. Es wurden meist teure Lösungen vorgesehen, wenn der Kopf und Teilbereiche des Schaftes aus einem rostfreien Material gefertigt werden mußten. Zudem wurden Schweißlösungen eingesetzt, wobei eine Bohrspitze aus härtbarem Material, also Kohlenstoffstahl, mit dem übrigen Bereich der Schraube verschweißt wurde.

Dadurch sind nicht nur mehrere Arbeitsgänge erforderlich, sondern es ergeben sich auch besonders hohe Herstellkosten.

Die vorliegende Erfindung hat sich daher zur Aufgabe gestellt, bei einer Schraube aus rostfreiem Stahl eine Möglichkeit zu schaffen, mit dieser ein Loch zu formen, ohne daß dabei Schweißlösungen mit verschiedenen Materialien eingesetzt werden müssen.

Erfindungsgemäß wird vorgeschlagen, daß alle Abschnitte der Schraube einschließlich des spanlos lochformenden, spitzwinklig zur Schraubenachse zum Ende hin sich verjüngenden Endabschnittes durchgehend aus einem rostfreien Stahl gebildet sind.

Schrauben mit der eingangs erläuterten Ausführungsform sind in einigen Ausführungsvarianten bekannt geworden. So ist z.B. in der US 2 015 159 A ein Befestiger gezeigt und beschrieben, welcher eine Nagelspitze und am Schaft ein entsprechendes Gewinde aufweist. Durch einen Schlag mit einem Hammer wird die Spitze durch ein dünnes Metallblech hindurchgeschlagen und anschließend durch eine entsprechende Drehbewegung der Gewindeabschnitt hineingedreht. Diese Kombination aus einem Nagel und einer Schraube war zum Anmeldezeitpunkt sicherlich aus einem Kohlenstoffstahl gefertigt worden, da zum damaligen Zeitpunkt wohl noch kein Gedanke an rostfreie Befestigungselemente vorhanden war.

Aus der EP 0 464 071 B1 ist eine loch- und gewindeformende Schraube bekannt, welche einen sich verjüngenden Lochformteil aufweist, wobei die Schraube einstückig aus vergütetem Stahl besteht. Durch die Rotation der Schraube werden zwischen der Schraube und dem zu durchformenden Blech Reibflächen gebildet, so daß das Metallblech so erhitzt wird, daß das Material in seinen plastischen Bereich übergeführt wird, indem es radial so nachgiebig wird, daß sich eine erwünschte Lochaufweitung mit Materialverdrängung zu einer Düse ergibt. Auch bei dieser Ausführung ist also eine Lösung mit einem Kohlenstoffstahl angestrebt worden.

Eine weitere bekannte Schraube (WO94/25764 A) besteht mit Ausnahme einer entsprechenden Oberflächenschicht aus einem austhenitischen rostfreien Stahl. Um diesfalls im Bereich des Bohrteiles am freien Ende der Schraube eine ausreichende Härte zu erzielen, wird zur Verbindung von zwei verschiedenen Abschnitten aus rostfreiem Stahl und aus Kohlenstoffstahl anstelle einer Schweissung eine entsprechende Oberflächenschicht aufgebracht. Durch diesen Härtevorgang wird jedoch der Korrosionsschutz vermindert, so dass anschliessend eine zusätzliche Zinkschicht aufgetragen werden muss. Demnach ist auch bei dieser Ausgestaltung klar vorgegeben, dass die Korrosionsbeständigkeit durch die entsprechende Härtung herabgesetzt wird.

Durch die vorliegende Erfindung ist erstmals die Möglichkeit geschaffen worden, das Loch für die gewindeformende Schraube mit einem entsprechenden Endabschnitt aus einem rostfreien Stahl zu formen. Bisher wurde es von der Fachwelt als unmöglich angesehen, mit einer Schraube aus einem rostfreien Stahl ein Loch zu formen. Vielmehr wurde immer davon ausgegangen, daß es ja eines Bohrvorganges oder aber einer entsprechend starken Erwärmung bis in den plastischen Bereich bedarf, um überhaupt ein Loch zu bohren oder einfach zu formen. Der Fachmann mußte bisher annehmen, daß ein Bohrvorgang mit entsprechenden "Schneiden" aus rostfreiem Material völlig unmöglich ist, und daß es für das Formen eines Loches ohne Einsatz von Bohrschneiden gleichfalls des Einsatzes von Kohlenstoffstahl, also entsprechend vergütetem Stahl, bedarf.

Durch die vorliegende Erfindung ist also ein Vorurteil der Fachwelt überwunden worden, denn es wurde ermöglicht, mit einer Schraube aus einem rostfreien Stahl und ferner auch einem rostfreien Endabschnitt das Loch zu formen, das Gewinde zu formen und somit einen durchgehend aus rostfreiem Stahl gebildeten Befestiger einsetzen zu können.

Für den lochformenden Endabschnitt sind verschiedene Ausführungsvarianten möglich, wobei sich je nach Material des Werkstückes und natürlich auch je nach Material der Schraube verschiedene Konstruktionsvarianten ergeben. So ist es denkbar, daß der spanlos lochformende Endabschnitt aus zwei oder mehr als zwei Teilabschnitten mit unterschiedlichem Winkel zur Schraubenachse gebildet ist. In diesem Zusammenhang ist es auch denkbar, daß der spanlos lochformende Endabschnitt im Querschnitt drei- oder mehreckig, kreisförmig, ellipsenförmig, gleichdickförmig oder dergleichen ausgeführt ist.

Besonders vorteilhaft ist es, wenn ein besonderes Verfahren zum Eindrehen der Schraube eingesetzt wird. Erfindungsgemäß wird dazu vorgeschlagen, daß beim spanlos lochformenden Drehen der durchgehend aus rostfreiem Stahl bestehenden Schraube zusätzlich zum Drehantrieb eine axiale Schlageinwirkung auf die Schraube ausgeübt wird. Es hat sich gezeigt, daß die zusätzliche Schlageinwirkung gerade beim Einsatz von Schrauben aus rostfreiem Stahl besonders vorteilhaft ist und ein schnelles Durchdringen des Werkstückes ohne bedeutende Wärmeentwicklung mit sich bringt.

Von Vorteil erweist sich ferner der zusätzliche Verfahrensschritt, daß die Schlageinwirkung auf die durchgehend aus rostfreiem Stahl bestehende Schraube nur beim Lochformvorgang einwirkt und beim Drehvorgang beim Gewindeformen und beim Eindrehen der Schraube in das Gewinde ausgeschaltet wird. Es ist also dann, wenn das Loch fertig geformt ist, die Schlageinwirkung weggenommen, so daß sich das Gewinde optimal einformen kann. Dadurch ergibt sich gerade beim Gewindeeinformen ein optimaler Paßsitz, wobei zu diesem Paßsitz auch beiträgt, daß die Lochwandung durch den vorhergehenden Lochformvorgang teils elastisch verformt worden ist, so daß nun diese Lochwandung sozusagen federnd gegen das Gewinde angepreßt wird.

Weitere erfindungsgemäße Merkmale und besondere Vorteile werden in der nachstehenden Beschreibung anhand der Zeichnung noch näher erläutert. Es zeigen:
- Fig. 1: eine Ansicht einer Schraube beim Einsatz zum Durchdringen eines Werkstückes;
- Fig. 2: einen Schnitt durch das Werkstück und die Schraube nach dem Einformen des Gewindes in das vorher geformte Loch.

Die Schraube 1 besteht aus einem zu einer Spitze oder zu einer spitzenähnlichen Form auslaufenden Endabschnitt 2, einem mit einem Gewinde 3 versehenen Schaftabschnitt 4 und einem Angriffsabschnitt 5 zum An- oder Einsetzen eines Werkzeuges. Der Endabschnitt 2 ist vorgesehen, um spanlos ein Loch 6 in einem Werkstück 7 zu formen, worauf dann der mit einem Gewinde 3 versehene Schaftabschnitt 4 das Gewinde in das geformte Loch 6 bzw. die nach unten gezogene Lochbegrenzungswand 8 einformt.

Der spanlos lochformende Endabschnitt 2 ist spitzwinklig zur Schraubenachse 9 hin verjüngt ausgebildet. Das wesentliche Merkmal an der Schraube 1 ist jedoch darin zu sehen, daß sie aus einem rostfreien Stahl gebildet ist. Es ist dabei soweit gegangen worden, daß alle Abschnitte 2, 4 und 5, also die ganze Schraube 1, durchgehend aus einem rostfreien Stahl hergestellt ist.

Die spezielle konstruktive Ausgestaltung des Endabschnittes 2 ist in verschiedenen Varianten denkbar. Bei der gezeigten Ausführungsform ist einfach eine Kegelspitze vorgesehen. Es ist aber auch möglich, diesen spanlos lochformenden Endabschnitt 2 pyramidenförmig oder beispielsweise kegelstumpfförmig oder pyramidenstumpfförmig auszubilden. Bei Versuchen hat sich gezeigt, daß am Endabschnitt 2 nicht unbedingt eine ganz extreme Spitze ausgebildet sein muß, um die ordnungsgemäße Wirkung des Lochformens zu erzielen. Es sind auch verschiedene Querschnittsvarianten für den spanlos lochformenden Endabschnitt 2 denkbar. So könnte der Querschnitt dreieckig oder mehr als dreieckig, kreisförmig, ellipsenförmig, gleichdickförmig oder dergleichen ausgeführt werden. Möglich wäre es also auch, daß die unmittelbare "Spitze" selbst in Draufsicht kreisförmig, ellipsenförmig, gleichdickförmig oder dergleichen ausgeführt ist.

Von Vorteil ist es, wenn eine solche Schraube gemäß einem besonderen Verfahren eingedreht wird. Die Zeit für das Lochformen wird wesentlich verkürzt, wenn beim spanlos lochformenden Drehen der Schraube zusätzlich zum Drehantrieb eine axiale Schlageinwirkung auf die Schraube ausgeübt wird. Es kann also durch Einsatz eines entsprechenden Drehantriebes mit einer Schlageinwirkung in axialer Richtung wesentlich rascher eine Einformung des Loches bewirkt werden. An sich wäre es ja denkbar, dem Drehantrieb zusätzlich einen in Drehrichtung wirkenden Schlag zu überlagern, doch hat dies auf die Wirksamkeit und die Einformdauer keinen Einfluß.

Besonders vorteilhaft ist es, wenn nach dem Formen des Loches für das nachfolgende Gewindeformen und das Eindrehen der Schraube keine axiale Schlageinwirkung mehr vorhanden ist, so daß lediglich der erforderliche Drehantrieb vorhanden ist. Dadurch ergibt sich im Werkstück ein wesentlich besserer Paßsitz des Gewindes.

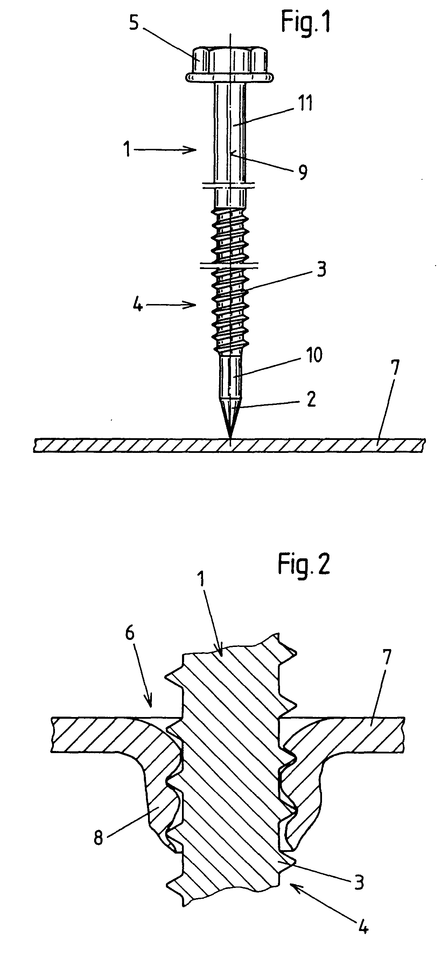

Die in Fig. 1 dargestellte Schraube ist eine relativ kurze Schraube mit einem nach einem zylindrischen Abschnitt 10 folgenden Gewindeabschnitt 4 und einem darauffolgenden, bis zum Angriffsabschnitt 5 reichenden, gewindefreien Abschnitt 11. Die erfindungsgemäßen Maßnahmen sind selbstverständlich bei allen Längen von Schrauben einsetzbar und wirken sich insbesondere bei sehr langen Schrauben positiv aus, da vielfach gerade lange Schrauben aus rostfreiem Stahl gefertigt werden sollen. Es ist auch möglich, den Gewindeabschnitt 4 über die ganze Länge des Schraubenschaftes zu führen oder aber mehrere Gewindeabschnitte mit Abstand aufeinander folgend vorzusehen, wobei die Gewindeabschnitte auch unterschiedliche Durchmesser aufweisen können.

## Patentansprüche

1. Loch- und gewindeformende Schraube mit einem zu einer Spitze oder zu einer spitzenähnlichen Form auslaufenden, schneidkanten Freien, spanlos lochformenden Endabschnitt, einem mit einem Gewinde versehenen Schaftabschnitt und einem Angriffsabschnitt zum An- oder Einsetzen eines Werkzeuges, **dadurch gekennzeichnet,** daß alle Abschnitte (2, 4, 5) der Schraube (1) einschließlich des spanlos lochformenden, spitzwinklig zur Schraubenachse (9) zum Ende hin sich verjüngenden Endabschnittes (2) durchgehend aus einem rostfreien Stahl gebildet sind.

2. Schraube nach Anspruch 1, dadurch gekennzeichnet, daß der spanlos lochformende Endabschnitt (2) aus zwei oder mehr als zwei Teilabschnitten mit unterschiedlichem Winkel zur Schraubenachse (9) gebildet ist.

3. Schraube nach Anspruch 1, dadurch gekennzeichnet, daß der spanlos lochformende Endabschnitt (2) im Querschnitt drei- oder mehreckig, kreisförmig, ellipsenförmig, gleichdickförmig oder dergleichen ausgeführt ist.

4. Verfahren zum Eindrehen einer loch- und gewindeformenden Schraube nach einem oder mehreren der Ansprüche 1 bis 3, dadurch gekennzeichnet, daß beim spanlos lochformenden Drehen der durchgehend aus einem rostfreien Stahl bestehenden Schraube (1) zusätzlich zum Drehantrieb eine axiale Schlageinwirkung auf die Schraube (1) ausgeübt wird.

5. Verfahren nach Anspruch 4, dadurch gekennzeichnet, daß die Schlageinwirkung auf die durchgehend aus einem rostfreiem Stahl bestehende Schraube (1) nur beim Lochformvorgang einwirkt und beim Drehvorgang beim Gewindeformen und beim Eindrehen der Schraube (1) in das Gewinde ausgeschaltet wird.

## Claims

1. A hole-forming and thread-forming screw with an end portion which narrows to a tip or a tip-like shape and which is free of cutting edges and forms a hole in a non-cutting manner, with a shank portion provided with a thread and with an engagement portion for the application or insertion of an implement, characterised in that all the portions (2,4,5) of the screw (1), including the end portion (2) which forms a hole in a non-cutting manner and which tapers towards the end at an acute angle to the screw axis (9), are formed entirely of stainless steel.

2. A screw according to Claim 1, characterised in that the end portion (2), which forms a hole in a non-cutting manner, is formed from two or more than two parts at a different angle to the screw axis (9).

3. A screw according to Claim 1, characterised in that the end portion (2), which forms a hole in a non-cutting manner, is triangular or polygonal, circular, elliptical, of constant diameter shape or the like in cross-section.

4. A method of screwing in a hole-forming and thread-forming screw according to one or more of Claims 1 to 3, characterised in that when the screw (1), which consists entirely of stainless steel, is being turned during the forming of a hole in a non-cutting manner an axial impact action is applied to the screw (1) in addition to the rotary drive.

5. A method according to Claim 4, characterised in that the impact action on the screw (1), which consists entirely of stainless steel, acts only during the hole-forming operation and is inoperative during the turning operation when a thread is being formed and when screwing the screw (1) into the thread.

## Revendications

1. Vis perforante et autotaraudante comportant un segment d'extrémité se terminant sous une forme de pointe ou analogue à une pointe sans arête de coupe, perforant sans enlever de copeaux, et comportant un segment de corps muni d'un filetage et un segment de prise pour recevoir un outil,
caractérisée en ce que
tous les segments (2, 4, 5) de la vis (1), y compris le segment d'extrémité (2) perforant sans enlever de copeaux, et qui diminue en pointe vers l'extrémité selon l'axe (9) de la vis, sont réalisés complètement en acier inoxydable.

2. Vis selon la revendication 1,
caractérisée en ce que
le segment d'extrémité (2) perforant sans enlever de copeaux, est formé de deux segments ayant des angles différents par rapport à l'axe (9) de la vis.

3. Vis selon la revendication 1,
caractérisée en ce que
le segment d'extrémité (2) perforant sans enlever de copeaux, a une section triangulaire ou polygonale, circulaire, elliptique, d'épaisseur constante ou analogue.

4. Procédé pour enfoncer une vis perforante et autotaraudante selon l'une quelconques des revendications 1 à 3,
caractérisé en ce que
pendant que l'on fait tourner en perforant sans enlever de copeaux, la vis (1) réalisée de façon continue en acier inoxydable, en plus de l'entraînement en rotation, on lui (1) applique un choc axial.

5. Procédé selon la revendication 4,
caractérisé en ce que
le choc n'est appliqué sur la vis (1) continue en acier inoxydable, qu'au cours de la phase de perforation et cette action est arrêtée lors de la phase d'entraînement en rotation pour le taraudage et le vissage de la vis (1) dans le filetage.
